# EUROPEAN PATENT SPECIFICATION

(11) **EP 2 121 848 B1**
(45) Date of publication and mention of the grant of the patent: **19.11.2014**
(21) Application number: 06835556.9
(22) Date of filing: 28.12.2006
(51) Int. Cl.: C08L 101/00, C08K 3/04

(54) **ELECTROCONDUCTIVE THERMOPLASTIC RESIN COMPOSITION AND PLASTIC ARTICLE**
ELEKTRISCH LEITFÄHIGE THERMOPLASTHARZZUSAMMENSETZUNG UND KUNSTSTOFFGEGENSTAND
COMPOSITION DE RÉSINE THERMOPLASTIQUE ÉLECTROCONDUCTRICE ET ARTICLE EN PLASTIQUE

(30) Priority: 22.12.2006 KR 20060132286
(43) Date of publication of application: 25.11.2009
(73) Proprietor: CHEIL INDUSTRIES INC., Gumi-si, Gyeongsangbuk-do 730-710 (KR)
(72) Inventor: KIM, Tae Kyun, Uiwang-si, Gyeonggi-do, (KR); LEE, Young, Sil, Uiwang-si, Gyeonggi-do, (KR); CHANG, Young Kyu, Uiwang-si, Gyeonggi-do, (KR)
(74) Representative: Bublak, Wolfgang
(86) International application number: PCT/KR2006/005856
(87) International publication number: WO 2008/078849

(56) References cited:
- EP-A2- 1 277 807
- WO-A1-02/076724
- JP-A- 4 306 256
- JP-A- 2004 168 966
- JP-A- 2004 168 966
- KR-A- 20060 052 657
- US-A- 5 908 585
- US-A1- 2003 122 111
- US-A1- 2004 232 389
- US-B2- 7 060 241

## Description

### [Technical Field]

The present invention relates to an electrically conductive thermoplastic resin composition and a plastic article. More specifically, the present invention relates to an electrically conductive thermoplastic resin composition that enables realization of an electrically conductive thermoplastic resin with an improved electrical conductivity and superior physical properties (e.g., impact resistance) and a plastic article.

### [Background Art]

Thermoplastic resins are plastics that are softened and plasticized by heating and are hardened by cooling. Thermoplastic resins are divided into: common plastics such as polyethylene, polypropylene, acrylic resin, styrenic resin, and vinyl resins; and engineering plastics such as polycarbonate, polyphenylene ether, polyamide, polyester, and polyimide resins.

Thermoplastic resins are widely used in applications including various household supplies, office automation equipment, and electric and electrical appliances owing to their superior processability and formability. There has been a continuous attempt to use a thermoplastic resin as a high value-added material by imparting specific properties as well as superior processability and formability to the thermoplastic resin, according to the kind and properties of products in which the thermoplastic resin is used. In particular, there have been various attempts to impart electrical conductivity to a thermoplastic resin and utilize the electrically conductive thermoplastic resin to obtain automobiles, electric apparatuses, electronic assemblies, and electrical cables with electromagnetic wave shielding performance.

The electrically conductive thermoplastic resin is commonly prepared from an electrically conductive thermoplastic resin composition obtained by mixing a thermoplastic resin with a conductive additive, such as carbon black, a carbon fiber, a metallic powder, a metal-coated inorganic powder and a metallic fiber. To ensure a desired level of electrical conductivity of the electrically conductive thermoplastic resin, the conductive additive needs to be used in a considerably large amount. However, the use of the conductive additive in a considerably large amount causes deterioration of impact resistance, which is one of the basic mechanical properties of the thermoplastic resin.

Meanwhile, there is an attempt to impart superior electrical conductivity to a thermoplastic resin by using carbon nanotubes as the conductive additive.

However, when an electrically conductive thermoplastic resin is prepared by mixing a thermoplastic resin with carbon nanotubes and injecting the mixture in an injector, the carbon nanotubes show mobility and unexpected orientation due to shearing stress occurring during the injection. As a result, disconnection between the carbon nanotubes in the electrically conductive thermoplastic resin occurs, thus causing deterioration in electrical conductivity. Accordingly, in the case where carbon nanotubes are used, the carbon nanotubes need to be added in a considerably great amount to the thermoplastic resin in order to ensure the desired electrical conductivity. It is also inevitable that the use of the carbon nanotubes in a considerable amount causes deterioration of impact resistance, which is one of the basic mechanical properties of the electrically conductive thermoplastic resin. Patent document JP 4 306256 A relates to a resin composition composed mainly of an aromatic polycarbonate resin and a polybutylene terephthalate. Further components are carbon black, titanium oxide and an elastic copolymer.
Patent document WO 02/076724 A1 as well as US 2003/0122111 A1 relate to electrically conductive films, such as electrostatic dissipative transparent coatings, comprising nanotubes.
Patent document JP 2004 168966 A relates to a conductive resin capable of obtaining a high conductivity even having a low filling rate of conductive powder in the coating film of the conductive resin composition. The conductive resin composition contains a conductive powder and carbon nanotube, a thermoplastic resin and an organic solvent, and the conductive powder contains preferably any of ≥1 of powder of silver, copper, or silver-plated copper.
Patent document US 2004/0232389 A1 relates to an electrically conductive composition comprising a polymeric resin; a nanosized dispersion agent; and carbon nanotubes, wherein the composition has an electrical volume resistivity less than or equal to about 10⁸ ohm-cm, and a notched Izod impact strength greater than or equal to about 5 kilojoules/square meter.
Patent document EP 1 277 807 A2 relates to a thermoplastic resin composition comprising two different thermoplastic resins (components A and B), conductive carbon black (component C), and conductive carbon black having a larger specific surface area than that of component C or hollow carbon fibril (component D), said thermoplastic resin composition having an island-and-sea micro structure constituted by component A and B, component C existing mostly in the island phase, and component D existing mostly in the sea phase.
Patent document US 5 908 585 A relates to a transparent electrically conductive film comprising an organic or inorganic transparent matrix having dispersed therein hollow carbon microfibers and an electrically conductive metal oxide powder, such as antimony-doped tin oxide. The matrix can be an organic polymer which is thermoplastic, thermosetting, or curable by ultraviolet radiation, or a metal oxide sol which can form an inorganic glass film, a hydrolysable or heat decomposable organic metal compound.

### [Technical Solution]

In accordance with one aspect of the present invention, there is provided an electrically conductive thermoplastic resin composition comprising: 80 to 99.9 parts by weight of a thermoplastic resin; 0.1 to 10 parts by weight of carbon nanotubes; 0.1 to 10 parts by weight of an impact modifier, based on a total of 100 parts by weight of the thermoplastic resin and the carbon nanotubes; and 0.1 to 10 parts by weight of conductive metal oxide, based on a total of 100 parts by weight of the thermoplastic resin and the carbon nanotubes, wherein the impact modifier is a core-shell graft copolymer, and the carbon nanotubes have a thickness of 1 to 50 nm.

Details of other aspects and exemplary embodiments of the present invention are encompassed in the following detailed description.

### [Best Mode]

Now, the present invention will be described in more detail with reference to the following Examples, such that those skilled in the art easily practice the present invention. These examples are provided only for illustrating the present invention and should not be construed as limiting the scope and spirit of the present invention.

According to one embodiment of the present invention, there is provided an electrically conductive thermoplastic resin composition comprising: 80 to 99.9 parts by weight of a thermoplastic resin; 0.1 to 10 parts by weight of carbon nanotubes; 0.1 to 10 parts by weight of an impact modifier, based on a total of 100 parts by weight of the thermoplastic resin and the carbon nanotubes; and 0.1 to 10 parts by weight of conductive metal oxide, based on a total of 100 parts by weight of the thermoplastic resin and the carbon nanotubes, wherein the impact modifier is a core-shell graft copolymer, and the carbon nanotubes have a thickness of 1 to 50 nm.

As described above, the electrically conductive thermoplastic resin composition comprises carbon nanotubes and conductive metal oxide. Accordingly, during injection of the electrically conductive thermoplastic resin composition, the conductive metal oxide prevents the carbon nanotubes from being unexpectedly oriented or mobilized, thus avoiding the disconnection between carbon nanotubes. Thus, it is possible to obtain an electrically conductive thermoplastic resin with more improved electrical conductivity by employing the resin composition. The impact modifier contained in the resin composition prevents deterioration of basic mechanical properties (*e.g*., impact resistance) of the electrically conductive thermoplastic resin, which results from the carbon nanotubes and conductive metal oxide used. Hence, it is possible to obtain an electrically conductive thermoplastic resin with superior impact resistance as well as more improved electrical conductivity from the electrically conductive thermoplastic resin composition.

Each constituent component of the electrically conductive thermoplastic resin composition will be described in detail.

The electrically conductive thermoplastic resin composition comprises 80 to 99.9 parts by weight of the thermoplastic resin.

Any thermoplastic resin including common and engineering plastics may be used without any particular limitation so long as it can be applied to extrusion or injection molding.

Examples of the thermoplastic resin include polyacetal, acrylic resin, polycarbonate, styrenic resin, polyester, vinyl resin, polyphenylene ether, polyolefin, polyarylate, polyamide, polyamide imide, polyarylsulfone, polyether imide, polyethersulfone, polyphenylene sulfide, fluorine, polyimide, polyetherketone, polybenzoxazole, polyoxadiazole, polybenzothiazole, polybenzimidazole, polypyridine, polytriazole, polypyrrolidine, polydibenzofuran, polysulfone, polyurea, polyphosphazene and liquid crystal polymer resins. In addition, the thermoplastic resin may be used as a copolymer or a mixture thereof.

In view of physical properties of the thermoplastic resin or the type of product applied, preferred examples of the thermoplastic resin include, but are not limited to: polyolefin resins such as polyethylene, polypropylene, ethylene-vinyl acetate copolymer, ethylene-methyl methacrylate copolymer resins; styrene resins; and engineering plastics such as polyamide, polyester (e.g., polyethylene terephthalate or polybutylene terephthalate) and polycarbonate resins.

Hereinafter, polycarbonate, polyester and polyolefin resins suitable as the thermoplastic resin will be described in detail.

First, the polyolefin resin may be used as the thermoplastic resin.

The polyolefin resin is prepared by radical polymerization or metal-catalyzed polymerization of an olefin monomer. In particular, preferred are polyolefin resins prepared by using Ziegler-Natta, metallocene or Phillips catalysts. There is no limitation as to the preparation method of the polyolefin resin. Accordingly, there may be used a polyolefin resin prepared by using any method well-known to those skilled in the art.

Second, the polyester resin may be used as the thermoplastic resin.

The polyester resin may contain an ester linkage in a polymer chain and be melted by heating. The polyester resin is prepared by polycondensation of dicarboxylic acid and a dihydroxy compound. There is no limitation as to the preparation method of the polyester resin. Accordingly, there may be used a polyester resin prepared by using any method well-known to those skilled in the art. In addition, any polyester resin, such as a homopolyester or copolyester resin, may be used without any particular limitation.

Third, the polycarbonate resin may be used as the thermoplastic resin.

Examples of the polycarbonate resin may include an aromatic polycarbonate resin, which is prepared by reacting phosgene, halogen formate, or diester carbonate with a diphenol compound represented by Formula 1 below:

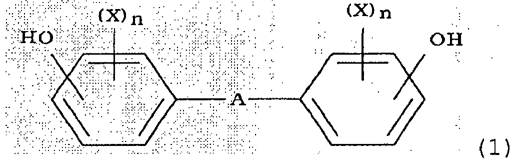

Wherein A is a single bond, C₁-C₅ alkylene, C₁-C₅ alkylidene, C₅-C₆ cycloalkylidene, -S- or -SO₂-; X is a halogen; and n is 0, 1 or 2.

Examples of the diphenol compound of Formula 1 include 4,4'-dihydroxydiphenyl, 2,2-bis-(4-hydroxyphenyl)-propane, 2,4-bis-(4-hydroxyphenyl)-2-methylbutane, 1,1-bis-(4-hydroxyphenyl)-cyclohexane, 2,2-bis-(3-chrolo-4-hydroxyphenyl)-propane and 2,2-bis-(3,5-dichrolo-4-hydroxyphenyl)-propane. Preferred are 2,2-bis-(4-hydroxyphenyl)-propane, 2,2-bis-(3,5-dichrolo-4-hydroxyphenyl)-propane or 1,1-bis-(4-hydroxyphenyl)-cyclohexane. More preferred is 2,2-bis-(4-hydroxyphenyl)-propane, also called "bisphenol-A (BPA)".

The polycarbonate resin may have a weight average molecular weight of 15,000 to 50,000 g/mol.

There is no limitation as to the type of- the polycarbonate resin. More specifically, the polycarbonate resin may be a linear or branched polycarbonate resin, or a polyester-carbonate copolymer resin. The branched polycarbonate resins may be prepared by using 0.05 to 2 mol% of a tri- or more functional (i.e., polyfunctional) compound, such as a tri- or more functional phenol compound, based on the total mole of the diphenol compound of Formula 1. The polyester-carbonate copolymer resins may be prepared by polymerizing polycarbonate in the presence of an ester precursor, such as dicarboxylic acid. The polyester-carbonate copolymer resins may be used singly, or as a mixture with a polycarbonate.

The polycarbonate resin may be homopolycarbonate or copolycarbonate resin, or a combination thereof.

As mentioned above, suitable examples of the thermoplastic resin include, but are not limited to polycarbonate, polyester and polyolefin resins. The composition and preparation method of each thermoplastic resin are well-known to those skilled in the art.

Meanwhile, the electrically conductive thermoplastic resin composition further comprises carbon nanotubes. The inclusion of the carbon nanotubes enables the thermoplastic resin to exhibit superior electrical conductivity.

The carbon nanotubes have a superior mechanical strength, a high initial Young's modulus and a large aspect ratio.. In addition, the carbon nanotubes have superior electrical conductivity and thermal stability. Accordingly, the carbon nanotubes are mixed with the thermoplastic resin, thereby imparting superior electrical conductivity to the thermoplastic resin.

Carbon nanotubes are synthesized by arc-discharge, pyrolysis, laser ablation, plasma enhanced chemical vapor deposition (PECVD), thermal chemical vapor deposition, electrolysis or flame synthesis. However, there is no limitation as to the synthesis method of the carbon nanotubes. Accordingly, carbon nanotubes synthesized by employing any method may be used for the electrically conductive thermoplastic resin composition without any particular limitation.

Carbon nanotubes are divided into single-walled carbon nanotubes, double-walled carbon nanotubes and multi-walled carbon nanotubes, based on the wall number thereof. These carbon nanotubes may be used for the electrically conductive thermoplastic resin composition without any particular limitation.

Carbon nanotubes have a thickness of 1 to 50 nm, preferably, 2 to 10 nm, and a length of 0.01 to 10 *µ*m, preferably, 1 to 10 *µ*m. Based on the thickness and length, the carbon nanotubes may have an aspect ratio (L/D) of 100 or more, preferably, 100 to 1,000. As a result, the carbon nanotubes are uniformly distributed in the thermoplastic resin, thereby realizing the electrically conductive thermoplastic resin with superior electrical conductivity.

The carbon nanotubes are used in an amount of 0.1 to 10 parts by weight for the electrically conductive thermoplastic resin composition. Preferably, the carbon nanotubes are used in an amount of 1 to 5 parts by weight. The content of carbon nanotubes less than 0.1 parts by weight makes it difficult to adjust the electrical conductivity of the prepared electrically conductive thermoplastic resin to the desired level. The content of carbon nanotubes exceeding 10 parts by weight causes deterioration in mechanical and physical properties of the electrically conductive thermoplastic resin.

The electrically conductive thermoplastic resin composition further comprises an impact modifier. The impact modifier is comprising a core-shell graft copolymer.

When such an impact modifier is contained in the electrically conductive thermoplastic resin composition, rubbery particles are distributed therein, thus enabling an improvement in the physical properties (e.g., impact resistance) thereof. That is to say, the impact modifier offsets. deterioration in physical properties of the electrically conductive thermoplastic resin due to the carbon nanotubes or the following conductive metal oxide, which are used to impart electrical conductivity to the electrically conductive thermoplastic resin, thereby obtaining the electrically conductive thermoplastic resin with improved physical properties.

The core-shell graft copolymer is prepared by polymerizing a rubber monomer and grafting a given unsaturated compound on a rubber core of the resulting polymer. The core-shell graft copolymer has a core-shell structure in which the unsaturated compound is grafted on the rubber core in the form of a hard shell.

For example, the core-shell graft copolymer has a core-shell structure in which an unsaturated compound, such as methyl methacrylate, styrene or acrylonitrile, is grafted on a rubber polymer core polymerized from at least one monomer selected from the group consisting of C₄-C₆ diene, acrylic and silicone rubber monomers.

Preferably, the core-shell graft copolymer comprises 20 to 90% by weight of the rubber core and 10 to 80% by weight of the shell grafted on the rubber core. As a result, the mechanical properties *(e.g.,* impact resistance) of the electrically conductive thermoplastic resin can be efficiently offset.

Examples of the diene rubber monomers that may be used to prepare the core-shell graft copolymer include butadiene, acrylic, ethylene-propylene, styrene-butadiene, acrylonitrilebutadiene, isoprene and ethylene-propylene-diene copolymer (EPDM) rubbers. Examples of the acrylic rubber monomers include methyl acrylate, ethyl acrylate, n-propyl acrylate, n-butyl acrylate, 2-ethylhexyl acrylate, hexyl methacrylate and 2-ethylhexyl methacrylate. As a hardener to polymerize the rubber monomer, there may be used ethylene glycol dimethacrylate, propylene glycol dimethacrylate, 1,3-butylene glycol dimethacrylate, 1,4-butylene glycol dimethacrylate, allyl methacrylate and triallyl cyanurate.

Examples of the silicone rubber monomer include hexamethyl cyclotrisiloxane, octamethyl cyclotetrasiloxane, decamethyl cyclopentasiloxane, dodecamethyl cyclohexasiloxane, trimethyl triphenyl cyclotrisiloxane, tetramethyl tetraphenyl cyclotetrasiloxane and octaphenyl cyclotetrasiloxane. As a hardener to polymerize the silicone rubber monomer, there may be used trimethoxy methylsilane, triethoxy phenylsilane, tetramethoxysilane and tetraethoxysilane.

Examples of the rubber monomer that may be used to prepare the core-shell graft copolymer include, but are not limited to, diene, acrylic and silicone rubber monomers. In addition, any diene, acrylic and silicone rubber monomer may be used without any particular limitation.

The impact modifier is used in an amount of 0.1 to 10 parts by weight, based on a total of 100 parts by weight of the thermoplastic resin and the carbon nanotubes. The inclusion of the impact modifier in this amount causes considerable improvement in physical properties such as impact resistance, tensile strength, flexural strength and flexural modulus of the electrically conductive thermoplastic resin, and prevents mobility and orientation of the carbon nanotubes, thereby imparting high electrical conductivity to the electrically conductive thermoplastic resin.

The electrically conductive thermoplastic resin composition further comprises conductive metal oxide. The conductive metal oxide prevents the carbon nanotubes from being oriented or mobilized during injection of the electrically conductive thermoplastic resin composition, thus avoiding disconnection between the carbon nanotubes. Thus, it is possible to obtain the electrically conductive thermoplastic resin with more improved electrical conductivity.

The conductive metal oxide may be any metal oxide with conductivity. Examples of the conductive metal oxide include titanium oxide, zinc oxide, indium oxide, tin oxide, indium tin oxide, antimony oxide, zirconium oxide, aluminum oxide, magnesium oxide, barium oxide, calcium oxide, strontium oxide, chromium oxide and iron oxide. The conductive metal oxide may be used alone or as a mixture thereof. In addition, to further improve the conductivity of the conductive metal oxide, the conductive metal oxide may be doped with a metal selected from the group consisting of aluminum, gallium, germanium, indium and tin, be coated with the metal, or be mixed with the metal. Alternatively, other physical or chemical techniques may be used in combination of the metal with metal oxide. There is no limitation as to the shape of the conductive metal oxide. More specifically, the conductive metal oxide may be particle, fiber, flat or amorphous shape.

Conductive zinc oxide is preferred. The conductive zinc oxide may be prepared from various zinc oxides. The conductive zinc oxide may be composed of basic constituent particles (so-called primary particles), or aggregate particles (so-called secondary particles) in which the basic constituent particles are fused and bound together. Aggregate particles are preferred.

The conductive zinc oxide has an average diameter of 300 nm or less, preferably, 200 nm or less.

The conductive zinc oxide has a structure in which zinc oxide is combined with one metal selected from the group consisting of aluminum, gallium, germanium, indium and tin. The combination is carried out by doping, coating, mixing or other physical/chemical bonding techniques.

The conductive metal oxide is used in an amount of 0.1 to 10 parts by weight, preferably, 0.5 to 5 parts by weight, based on a total of 100 parts by weight of the thermoplastic resin and the carbon nanotubes. The content of the conductive metal oxide less than 0.1 parts by weight makes it impossible to prevent the carbon nanotubes from being unexpectedly oriented or mobilized. As a result, the carbon nanotubes cannot be efficiently prevented from being disconnected, and thus, the electrically conductive thermoplastic resin may not have sufficient electrical conductivity. Meanwhile, the content of the conductive metal oxide exceeding 10 parts by weight causes deterioration in mechanical properties (e.g., impact resistance) of the electrically conductive thermoplastic resin.

The electrically conductive thermoplastic resin composition may further comprise an additive suitable for the use intended. Examples of additives include vinyl copolymers, lubricants, release agents, plasticizers, nucleating agents, stabilizers, flame retardants, dyes, pigments, modifiers and inorganic additives. The additive is added in an amount equal to or less than 30 parts by weight to the electrically conductive thermoplastic resin composition.

The preparation of an electrically conductive thermoplastic resin is carried out by general methods comprising: mixing each constituent component to prepare an electrically conductive thermoplastic resin composition; and melt-extruding the resin composition in an extruder. A plastic article is prepared from the electrically conductive thermoplastic resin.

According to another embodiment of the present invention, there is provided a plastic article prepared from the electrically conductive thermoplastic resin composition. For example, the plastic article may comprise a thermoplastic resin matrix, carbon nanotubes dispersed in the thermoplastic resin matrix, an impact modifier dispersed in the thermoplastic resin matrix, and conductive metal oxide dispersed in the thermoplastic resin matrix.

The plastic article exhibits more enhanced electrical conductivity owing to an interaction between the carbon nanotubes and the conductive metal oxide, which prevents orientation and mobility of the carbon nanotubes dispersed in the thermoplastic resin. In addition, the impact modifier dispersed in the thermoplastic resin offsets deterioration in mechanical properties (e.g., impact resistance) of the plastic article due to the inclusion of the carbon nanotubes and conductive metal oxide, thereby ensuring superior mechanical properties of the plastic article.

Accordingly, since the plastic article imparts electrical conductivity to automobiles, electric apparatuses, electronic assemblies and electrical cables, they may be widely and preferably applied to a variety of uses, e.g., antistatic or electrostatic discharge.

### [Mode for Invention]

The present invention will be better understood from the following examples. However, these examples are not to be construed as limiting the scope of the invention.

The further details for (A) a thermoplastic resin (polycarbonate resin), (B) carbon nanotubes, (C) an impact modifier and (D) conductive metal oxide used in the following examples and comparative examples are as follows:
(A) Thermoplastic resin (polycarbonate resin) Bisphenol-A polycarbonate (weight average molecular weight (Mw): 25,000 g/mol) was used as a polycarbonate resin selected from thermoplastic resins.
(B) Carbon nanotubes
   Multi-walled carbon nanotubes (C-tube 100^{®} available from CNT Co., LTD., thickness: 10-50 nm, length: 1-25 *µ*m) were used as carbon nanotubes.
(C) Impact modifier
   An ethyl acrylate-butadien-styrene copolymer (C-223A^{®} available from Mitsubishi Chemical Corp., average particle size: 100 nm to 1 *µ*m) were used as an impact modifier.
(D) Conductive metal oxide
   Conductive zinc oxide (23-K^{®} available from Hakushi Tech) was used as conductive metal oxide.

### EXAMPLES 1 TO 5 AND COMPARATIVE EXAMPLES 1 TO 4

The content of each constituent component used in the following examples 1 to 5 and comparative examples 1 to 4 is shown in Tables 1 and 2. Respective components were mixed in accordance with the composition shown in Tables 1 and 2 to prepare an electrically conductive thermoplastic resin composition. The composition was extruded in a double-screw extruder (L/D=36, Φ=45 mm) and the resulting extrudate was pelletized. The pellet was injected in an injection machine (10 oz) at 270°C to prepare a sample of 10 cm x 10 cm for measurement of physical properties and electrical conductivity.

First, the electrical conductivity (surface resistance) of each sample was measured with a surface resistance meter (electrical conductivity evaluation).

The notched IZOD impact strength (1/8") of the sample was measured in accordance with ASTM D256, which is an American standard test method for determining an IZOD impact strength of plastics with a pendulum having a uniform weight (impact resistance evaluation).

The measurement results of the electrical conductivity and impact resistance are shown in Tables 1 and 2 below.

**Table 1**

| | Examples | | | | |
|---|---|---|---|---|---|
| | 1 | 2 | 3 | 4 | 5 |
| (A) thermoplastic resin (wt. parts) | 97 | 97 | 97 | 98 | 99 |
| (B) carbon nanotubes (wt. parts) | 3 | 3 | 3 | 2 | 1 |
| (C) impact modifier (wt. parts) | 1 | 3 | 3 | 3 | 3 |
| (D) conductive metal oxide (wt. parts) | 1 | 1 | 3 | 3 | 3 |
| IZOD impact strength (1/8") (23°C, kgf · cm/cm) | 16 | 19 | 17 | 18 | 19 |
| Surface resistance (Ω/sq.) | 10⁸ | 10⁷ | 10⁵ | 10⁹ | 10¹¹ |

**Table 2**

| | Comparative Examples | | | |
|---|---|---|---|---|
| | 1 | 2 | 3 | 4 |
| (A) thermoplastic resin (wt. parts) | 97 | 97 | 100 | 100 |
| (B) carbon nanotubes (wt. parts) | 3 | 3 | - | - |
| (C) impact modifier (wt. parts) | - | - | - | 3 |
| (D) conductive metal oxide (wt. parts) | - | 1 | 3 | 3 |
| IZOD impact strength (1/8") (23 °C, kgf · cm/cm) | 4 | N · A^{*} | N · A^{*} | 20 |
| Surface resistance (Ω/sq.) | 10¹⁵ | 10⁹ | 10¹⁵ | 10¹⁵ |

| | | | | |
|---|---|---|---|---|
| N · A^{*} (Not Available): IZOD impact strength cannot be measured due to excessively high brittleness of sample. | | | | |

As can be seen from the data in Tables 1 and 2, samples of Examples 1 to 5 comprising all constituent components of carbon nanotubes, an impact modifier and conductive metal oxide exhibited improved electrical conductivity, as compared to those of Comparative Examples 1, 3 and 4, which consist of any one or two of these components. In addition, the samples of Examples 1 to 5 exhibited improved impact resistance, as compared to that of Comparative Example 2, which comprises no impact modifier.

Accordingly, it can be confirmed that samples of Examples 1 to 5 exhibited both high electrical conductivity and impact resistance, when compared to those of Comparative Examples 1 to 4.

## Claims

1. An electrically conductive thermoplastic resin composition comprising:
80 to 99.9 parts by weight of a thermoplastic resin;
0.1 to 10 parts by weight of carbon nanotubes;
1 to 10 parts by weight of an impact modifier, based on a total of 100 parts by weight of the thermoplastic resin and the carbon nanotubes; and
0.1 to 10 parts by weight of conductive metal oxide, based on a total of 100 parts by weight of the thermoplastic resin and the carbon nanotubes,
wherein the impact modifier is a core-shell graft copolymer, and
the carbon nanotubes have a thickness of 1 to 50 nm.

2. The electrically conductive thermoplastic resin composition according to claim 1, wherein the thermoplastic resin is selected from the group consisting of polyacetal, acrylic resin, polycarbonate, styrenic resin, polyester, vinyl resin, polyphenylene ether, polyolefin, polyarylate, polyamide, polyamide imide, polyarylsulfone, polyether imide, polyethersulfone, polyphenylene sulfide, fluorine, polyimide, polyetherketone, polybenzoxazole, polyoxadiazole, polybenzothiazole, polybenzimidazole, polypyridine, polytriazole, polypyrrolidine, polydibenzofuran, polysulfone, polyurea, polyphosphazene and liquid crystal polymer resins, and a copolymer or mixture thereof.

3. The electrically conductive thermoplastic resin composition according to claim 2, wherein the thermoplastic resin includes a polycarbonate resin, and
wherein the polycarbonate resin includes an aromatic polycarbonate resin, which is prepared by reacting phosgene, halogen formate or diester carbonate with a diphenol compound by represented by Formula 1 below: 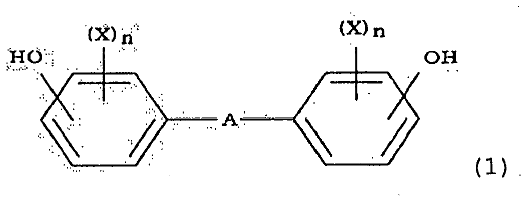 Wherein A is a single bond, C₁-C₅ alkylene, C₁-C₅ alkylidene, C₅-C₆ cycloalkylidene, -S- or -SO₂-; X is a halogen; and n is 0, 1 or 2.

4. The electrically conductive thermoplastic resin composition according to claim 2, wherein the thermoplastic resin includes a polycarbonate resin having a weight average molecular weight of 15,000 to 50,000 g/mol.

5. The electrically conductive thermoplastic resin composition according to claim 1, wherein the carbon nanotubes are single-walled carbon nanotubes or multi-walled carbon nanotubes.

6. The electrically conductive thermoplastic resin composition according to claim 1, wherein the carbon nanotubes have a length of 0.01 to 10 µm.

7. The electrically conductive thermoplastic resin composition according to claim 1, wherein the carbon nanotubes have an aspect ratio of 100 to 1,000.

8. The electrically conductive thermoplastic resin composition according to claim 1, wherein the core-shell graft copolymer has a core-shell structure in which at least one unsaturated compound selected from the group consisting of methyl methacrylate, styrene and acrylonitrile is grafted on a rubber core polymerized from at least one selected from the group consisting of C₄-C₆ diene, acrylic and silicone rubber monomers.

9. The electrically conductive thermoplastic resin composition according to claim 1, wherein the conductive metal oxide includes at least one selected from the group consisting of titanium oxide, zinc oxide, indium oxide, tin oxide, indium tin oxide, antimony oxide, zirconium oxide, aluminum oxide, magnesium oxide, barium oxide, calcium oxide, strontium oxide, chromium oxide, iron oxide, and a mixture thereof.

10. The electrically conductive thermoplastic resin composition according to claim 9, wherein the conductive metal oxide includes zinc oxide combined with a metal selected from the group consisting of aluminum, gallium, germanium, indium and tin.

11. A plastic article prepared from the electrically conductive thermoplastic resin composition according to any one of claims 1 to 10.

12. The plastic article according to claim 11 comprising:
a thermoplastic resin matrix;
carbon nanotubes dispersed in the thermoplastic resin matrix;
an impact modifier dispersed in the thermoplastic resin matrix; and
conductive metal oxide dispersed in the thermoplastic resin matrix.

## Patentansprüche

1. Elektrisch leitende thermoplastische Harzzusammensetzung, umfassend:
80 bis 99,9 Gewichtsteile eines thermoplastischen Harzes;
0,1 bis 10 Gewichtsteile Kohlenstoffnanoröhrchen;
1 bis 10 Gewichtsteile eines Schlagzähigkeitsmodifikators, bezogen auf insgesamt 100 Gewichtsteile des thermoplastischen Harzes und der Kohlenstoffnanoröhrchen; und
0,1 bis 10 Gewichtsteile leitendes Metalloxid, bezogen auf insgesamt 100 Gewichtsteile des thermoplastischen Harzes und der Kohlenstoffnanoröhrchen,
wobei der Schlagzähigkeitsmodifikator ein Kern-Schale-Propf-Copolymer ist, und
die Kohlenstoffnanoröhrchen eine Dicke von 1 bis 50 nm aufweisen.

2. Elektrisch leitende thermoplastische Harzzusammensetzung nach Anspruch 1, wobei das thermoplastische Harz ausgewählt ist aus der Gruppe bestehend aus Polyacetal, Acrylharz, Polycarbonat, Styrolharz, Polyester, Vinylharz, Polyphenylenether, Polyolefin, Polyacrylat, Polyamid, Polyamidimid, Polyarylsulfon, Polyetherimid, Polyethersulfon, Polyphenylensulfid, Fluor, Polyimid, Polyetherketon, Polybenzoxazol, Polyoxadiazol, Polybenzothiazol, Polybenzimidazol, Polypyridin, Polytriazol, Polypyrrolidin, Polydibenzofuran, Polysulfon, Polyharnstoff, Polyphosphazen und flüssigen Kristallpolymerharzen, und einem Copolymer oder Gemisch davon.

3. Elektrisch leitende thermoplastische Harzzusammensetzung nach Anspruch 2, wobei das thermoplastische Harz ein Polycarbonatharz einschließt, und
wobei das Polycarbonatharz ein aromatisches Polycarbonatharz einschließt, welches durch Umsetzung von Phosgen, Halogenformiat oder Diestercarbonat mit einer Diphenolverbindung dargestellt durch Formel 1 unten: 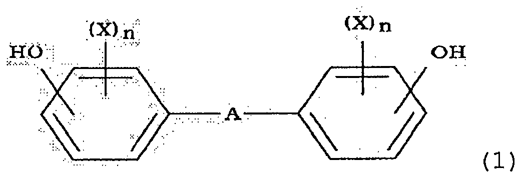 hergestellt wird, wobei A eine einzelne Bindung, C₁-C₅-Alkylen, C₁-C₅-Alkyliden, C₅-C₆-Cycloalkyliden, -S- oder -SO₂- ist; X ein Halogen ist; und n 0, 1 oder 2 ist.

4. Elektrisch leitende thermoplastische Harzzusammensetzung nach Anspruch 2, wobei das thermoplastische Harz ein Polycarbonatharz mit einem Gewichtsmittel des Molekulargewichts von 15.000 bis 50.000 g/mol einschließt.

5. Elektrisch leitende thermoplastische Harzzusammensetzung nach Anspruch 1, wobei die Kohlenstoffnanoröhrchen einwandige Kohlenstoffnanoröhrchen oder mehrwandige Kohlenstoffnanoröhrchen sind.

6. Elektrisch leitende thermoplastische Harzzusammensetzung nach Anspruch 1, wobei die Kohlenstoffnanoröhrchen eine Länge von 0,01 bis 10 µm aufweisen.

7. Elektrisch leitende thermoplastische Harzzusammensetzung nach Anspruch 1, wobei die Kohlenstoffnanoröhrchen ein Längenverhältnis (Aspektverhältnis) von 100 bis 1.000 aufweisen.

8. Elektrisch leitende thermoplastische Harzzusammensetzung nach Anspruch 1, wobei das Kern-Schale-Propf-Copolymer eine Kern-Schale-Struktur aufweist, in welcher mindestens eine ungesättigte Verbindung ausgewählt aus der Gruppe bestehend aus Methylmethacrylat, Styrol und Acrylnitril auf einen Kautschukkern gepropft ist, der aus mindestens einem ausgewählt aus der Gruppe bestehend aus C₄-C₆-Dien-, Acryl- und SiliconKautschuk-Monomeren polymerisiert ist.

9. Elektrisch leitende thermoplastische Harzzusammensetzung nach Anspruch 1, wobei das leitende Metalloxid wenigstens eines, ausgewählt aus der Gruppe bestehend aus Titanoxid, Zinkoxid, Indiumoxid, Zinnoxid, Indium-Zinn-Oxid, Antimonoxid, Zirkoniumoxid, Aluminiumoxid, Magnesiumoxid, Bariumoxid, Calciumoxid, Strontiumoxid, Chromoxid, Eisenoxid, und einem Gemisch davon, einschließt.

10. Elektrisch leitende thermoplastische Harzzusammensetzung nach Anspruch 9, wobei das leitende Metalloxid Zinkoxid kombiniert mit einem Metall, ausgewählt aus der Gruppe bestehend aus Aluminium, Gallium, Germanium, Indium und Zinn, einschließt.

11. Kunststoffgegenstand, hergestellt aus der elektrisch leitenden thermoplastischen Harzzusammensetzung nach irgendeinem der Ansprüche 1 bis 10.

12. Kunststoffgegenstand nach Anspruch 11, umfassend:
eine thermoplastische Harz-Matrix;
Kohlenstoffnanoröhrchen, dispergiert in der thermoplastischen Harz-Matrix;
einen Schlagzähigkeitsmodifikator, dispergiert in der thermoplastischen Harz-Matrix; und
ein leitendes Metalloxid, dispergiert in der thermoplastischen Harz-Matrix.

## Revendications

1. Composition de résine thermoplastique conductrice de l'électricité, comprenant :
80 à 99,9 parties en poids d'une résine thermoplastique ;
0,1 à 10 parties en poids de nanotubes de carbone ;
1 à 10 parties en poids d'un modifiant choc, pour un total de 100 parties en poids de la résine thermoplastique et des nanotubes de carbone ; et
0,1 à 10 parties en poids d'un oxyde métallique conducteur, pour un total de 100 parties en poids de la résine thermoplastique et des nanotubes de carbone,
dans laquelle le modifiant choc est un copolymère greffé à structure coeur-coque, et
les nanotubes de carbone ont une épaisseur de 10 à 50 nm.

2. Composition de résine thermoplastique conductrice de l'électricité selon la revendication 1, dans laquelle la résine thermoplastique est choisie dans le groupe consistant en un polyacétal, une résine acrylique, un polycarbonate, une résine styrénique, un polyester, une résine vinylique, un poly(phénylène éther), une polyoléfine, un polyarylate, un polyamide, un polyamide-imide, une polyarylsulfone, un polyétherimide, une polyéthersulfone, un poly(sulfure de phénylène), le fluor, un polyimide, une polyéthercétone, un polybenzoxazole, un polyoxadiazole, un polybenzothiazole, un polybenzimidazole, une polypyridine, un polytriazole, une polypyrrolidine, un polydibenzofuranne, une polysulfone, une polyurée, un polyphosphazène et des résines polymères cristaux liquides, et un copolymère ou mélange de ceux-ci.

3. Composition de résine thermoplastique conductrice de l'électricité selon la revendication 1, dans laquelle la résine thermoplastique comprend une résine de polycarbonate, et
dans laquelle la résine de polycarbonate comprend une résine de polycarbonate aromatique qui est préparée par réaction de phosgène, d'un halogénoformiate ou d'un diester carbonate, avec un composé diphénol représenté par la formule 1 ci-dessous : 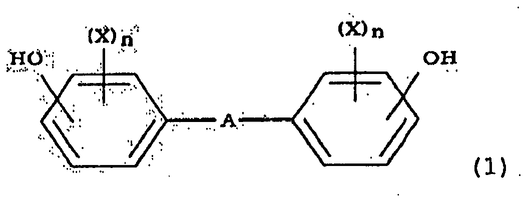 dans laquelle A est une liaison simple, un groupe alkylène en C₁-C₅, alkylidène en C₁-C₅, cycloalkylidène en C₅-C₆, -S- ou -SO₂- ; X est un halogène ; et n vaut 0, 1 ou 2.

4. Composition de résine thermoplastique conductrice de l'électricité selon la revendication 2, dans laquelle la résine thermoplastique comprend une résine de polycarbonate ayant une masse moléculaire moyenne en masse de 15 000 à 50 000 g/mole.

5. Composition de résine thermoplastique conductrice de l'électricité selon la revendication 1, dans laquelle les nanotubes de carbone sont des nanotubes de carbone à simple paroi ou des nanotubes de carbone à plusieurs parois.

6. Composition de résine thermoplastique conductrice de l'électricité selon la revendication 1, dans laquelle les nanotubes de carbone ont une longueur de 0,01 à 10 µm.

7. Composition de résine thermoplastique conductrice de l'électricité selon la revendication 1, dans laquelle les nanotubes de carbone ont un rapport d'aspect de 100 à 1000.

8. Composition de résine thermoplastique conductrice de l'électricité selon la revendication 1, dans laquelle le copolymère greffé à structure coeur-coque a une structure coeur-coque dans laquelle au moins un composé insaturé choisi dans le groupe consistant en le méthacrylate de méthyle, le styrène et l'acrylonitrile est greffé sur un coeur de caoutchouc polymérisé à partir d'au moins l'un choisi dans le groupe consistant en un diène monomère en C₄-C₆, des monomères acryliques et des monomères de caoutchouc-silicone.

9. Composition de résine thermoplastique conductrice de l'électricité selon la revendication 1, dans laquelle l'oxyde métallique conducteur comprend au moins l'un choisi dans le groupe consistant en l'oxyde de titane, l'oxyde de zinc, l'oxyde d'indium, l'oxyde d'étain, l'oxyde d'indium et d'étain, l'oxyde d'antimoine, l'oxyde de zirconium, l'oxyde d'aluminium, l'oxyde de magnésium, l'oxyde de baryum, l'oxyde de calcium, l'oxyde de strontium, l'oxyde de chrome, l'oxyde de fer ou un mélange de ceux-ci.

10. Composition de résine thermoplastique conductrice de l'électricité selon la revendication 9, dans laquelle l'oxyde métallique conducteur comprend de l'oxyde de zinc combiné à un métal choisi dans le groupe consistant en l'aluminium, le gallium, le germanium, l'indium et l'étain.

11. Objet plastique préparé à partir de la composition de résine thermoplastique conductrice de l'électricité selon l'une quelconque des revendications 1 à 10.

12. Objet plastique selon la revendication 11, comprenant :
une matrice de résine thermoplastique ;
des nanotubes de carbone dispersés dans la matrice de résine thermoplastique ;
un modifiant choc dispersé dans la matrice de résine thermoplastique ; et
un oxyde métallique conducteur dispersé dans la matrice de résine thermoplastique.
